## Europäisches Patentamt
## European Patent Office
## Office européen des brevets

(11) Veröffentlichungsnummer: **0 094 337**
**A2**

# EUROPÄISCHE PATENTANMELDUNG

(21) Anmeldenummer: 83710021.3

(22) Anmeldetag: 27.04.83

(51) Int. Cl.³: **B 65 G 1/08**

(30) Priorität: 06.05.82 SE 8202833

(71) Anmelder: **ASEA AB, S-721 83 Västeras (SE)**

(43) Veröffentlichungstag der Anmeldung: 16.11.83
**Patentblatt 83/46**

(72) Erfinder: **Berg, Arne, Bessemergatan 85,
S-724 74 Västeras (SE)**

(74) Vertreter: **Boecker, Joachim, Dr.-Ing.,
Rathenauplatz 2-8, D-6000 Frankfurt a.M. 1 (DE)**

(84) Benannte Vertragsstaaten: **AT BE CH DE FR GB IT LI NL**

(54) **Verfahren für die Zuführung und Wegführung von Arbeitsstücken zu und von einer von einem Roboter bedienten Bearbeitungsmaschine und Magazin zur Durchführung des Verfahrens.**

(57) Verfahren und Magazin (1) zur Durchführung des Verfahrens zur Bedienung von Bearbeitungsmaschinen durch einen Roboter. Von der Bearbeitungsmaschine zu bearbeitende Werkstücke (7) werden auf Paletten (5) zugeführt, die sich auf einer ersten Transportbahn (2) befinden. Ein Roboter greift die Werkstücke (7) von der der Bearbeitungsmaschine am nächsten liegenden Palette (5a), setzt das Werkstück in die Bearbeitungsmaschine ein, nimmt es nach erfolgter Bearbeitung aus der Bearbeitungsmaschine heraus und setzt das bearbeitete Werkstück (9) auf einer Palette (6a) auf einer zweiten Transportbahn (3) ab, auf welcher die Werkstücke weggeführt werden. Wenn eine Palette (5a) leergeräumt ist, wird diese vom Roboter ergriffen und auf die wegführende Transportbahn (3) aufgesetzt. Die Palette ist mit einem Greifstück (13) versehen, über welches der Roboter die Palette ergreift. Statt des Greifstücks (13) kann auf der Palette auch eine feste Attrappe (14) vorhanden sein, deren Form einem unbearbeiteten Werkstück entspricht. In diesem Falle kann der Roboter mit seiner normalen für die Werkstücke bestimmten Greifvorrichtung die Palette ergreifen und sie von der ersten Transportbahn (2) auf die zweite Transportbahn (3) überführen.

Patentanwalt und Rechtsanwalt
Dr.-Ing. Dipl.-Ing. Joachim B o e c k e r

0094337

6 Frankfurt/Main 1 , 15.4.1983
Rathenauplatz 2 - 8        B/th 21 284 PE
Telefon: (06 11) *28 23 55
Telex: 4 189 066 itax d

A S E A    Aktiebolag, Västeras/Schweden

**Verfahren für die Zuführung und Wegführung von Arbeitsstücken zu und von einer von einem Roboter bedienten Bearbeitungsmaschine und Magazin zur Durchführung des Verfahrens**

Die Erfindung betrifft ein Verfahren für die Zuführung und Wegführung von Arbeitsstücken zu und von einer von einem Roboter bedienten Bearbeitungsmaschine sowie ein Magazin zur Durchführung des Verfahrens.

In der Fertigungsindustrie ist man bestrebt, die Zahl der Bedienungspersonen für einen aus kostspieligen Maschinen bestehenden Maschinenpark so klein wie möglich zu halten, damit die Maschinen auch außerhalb der üblichen Arbeitszeit, z.B. am Abend, in der Nacht und an Feiertagen, ausgenutzt werden können.

Zur Erreichung dieses Ziels sind Roboter ein ausgezeichnetes Hilfsmittel. Sie sind vielseitig einsetzbar und leicht programmierbar, um Arbeitsvorgänge, wie beispielsweise das Handhaben von Werkstücken bei deren Einsetzen in die/Bearbeitungsmaschine und deren Herausnahme aus der Arbeitsmaschine nach erfolgter Bearbeitung ausführen zu können.

Bekannte Roboterinstallationen sind in der Weise ausge-

- 2 -

führt, daß einem bestimmten Werkstück angepaßte feste Zuführ- und Wegführbahnen oder Transportbahnen für Paletten für mehrere Werkstücke und mit besonderen Hebezeugen oder Transportvorrichtungen für die Wegführung von leeren Paletten oder zur Überführung von leeren Paletten von der Zuführbahn zu der Wegführbahn vorhanden sind. Hierbei müssen die Transportbahnen bei der Umstellung auf Werkstücke anderen Formats ausgetauscht oder völlig umgebaut werden. In dem erstgenannten Fall bringt dies vor allem bei der Herstellung von begrenzten, periodisch vorkommenden Serien von ähnlichen Werkstücken in derselben Bearbeitungsvorrichtung Nachteile mit sich. In dem letztgenannten Fall ist das Magazin kompliziert und teuer.

Der Erfindung liegt die Aufgabe zugrunde, ein Verfahren zu entwickeln, welches es ermöglicht, mit einfachen Magazinen eine lange unbemannte Betriebszeit bei einer roboterbedienten Bearbeitungsmaschine zu erreichen, und ein Magazin zu entwickeln, welches die Durchführung dieses Verfahrens ermöglicht.

Zur Lösung dieser Aufgabe wird ein Verfahren nach dem Oberbegriff des Anspruches 1 vorgeschlagen, welches erfindungsgemäß die im kennzeichnenden Teil des Anspruches 1 genannten Merkmale hat.

Ein Magazin zur Durchführung des Verfahrens ist gemäß der Erfindung durch die im Anspruch 2 genannten Merkmale gekennzeichnet.

Vorteilhafte Weiterbildungen des Magazins gemäß der Erfindung sind in den Ansprüchen 3 bis 5 genannt.

Gemäß der Erfindung werden also die zu bearbeitenden Werkstücke auf sich auf einer ersten Bahn befindlichen Paletten herangeführt, von einem Roboter in die Bearbei-

/3

tungsmaschine eingesetzt, nach erfolgter Bearbeitung von dem Roboter aus der Bearbeitungsmaschine herausgenommen und auf einer Palette abgesetzt, die sich auf einer zweiten Transportbahn befindet. Wenn eine Palette auf der ersten Transportbahn leergeräumt worden ist, wird diese von dem Roboter zu der zweiten Transportbahn transportiert. Ein zur Durchführung dieses Verfahrens geeignetes Magazin enthält eine erste Transportbahn, auf welcher die zu bearbeitenden Werkstücke auf Paletten liegen und der Bearbeitungsmaschine zugeführt werden, sowie eine Transportbahn, durch welche die auf Paletten liegenden bearbeiteten Werkstücke weggeführt werden. Die Werkstücke sind auf den Paletten in bestimmten Positionen plaziert. Die Paletten sind mit einer Einrichtung versehen, die es ermöglicht, daß eine geleerte Palette von dem Roboter gegriffen und auf die zweite Transportbahn gesetzt werden kann. Die Vorrichtung zum Greifen der Palette kann eine auf der Palette befestigte Attrappe sein, die im wesentlichen dieselbe Form wie ein unbearbeitetes Werkstück hat. Die Transportbahnen haben an der Entlade- bzw. Beladestation Fixiervorrichtungen für die Paletten, durch welche die Paletten in genau definierte Lagen gebracht und arretiert werden. Wenn die eine Bahn über der anderen angebracht ist, wird der kleinstmögliche Raum beansprucht. Die Bahnen können schräg angebracht sein, so daß die auf ihnen befindlichen Paletten von der Schwerkraft verschoben werden. Es können aber Antriebsvorrichtungen für die Bahnen zum schrittweisen Verschieben der Paletten auf den Bahnen vorhanden sein, wobei die schrittweise Verschiebung bei der Überführung einer geleerten Palette von der einen Bahn auf die andere Bahn erfolgt. Das Weiterschieben der Paletten auf der Bahn für die bearbeiteten Werkstücke kann durch den Roboter selbst geschehen, indem dieser bei der Überführung einer leeren Palette auf die wegführende Bahn die dort befindlichen Paletten wegschiebt.

Anhand des in den Figuren gezeigten Ausführungsbeispiels eines Magazins gemäß der Erfindung soll die Erfindung näher erläutert werden.

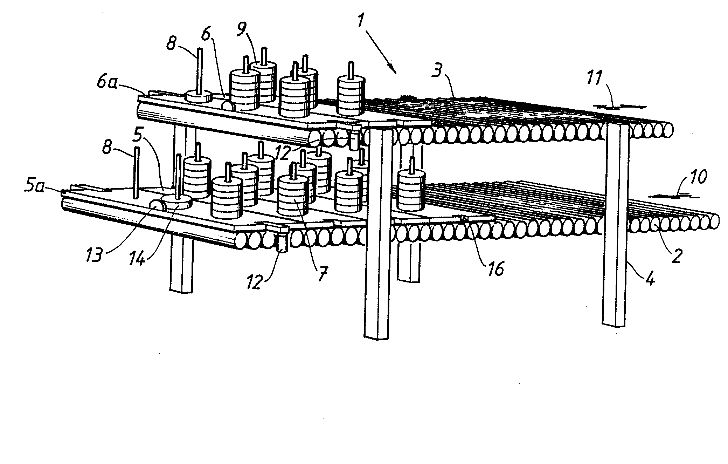

Die Figur zeigt ein Magazin 1 mit einer unteren Rollbahn 2 und einer oberen Rollbahn 3, die von den Stützen 4 getragen werden. Auf der unteren Rollbahn 2 befinden sich mehrere Paletten 5 und auf der oberen Rollbahn 3 mehrere Paletten 6. Ein nicht gezeigter Roboter und eine nicht gezeigte Bearbeitungsmaschine sind am linken Ende des Magazins 1 plaziert. Auf den Paletten 5 auf der unteren Rollbahn 2 liegt ein Vorrat an unbearbeiteten Werkstücken 7, beispielsweise Zahnradrohlingen mit einem Wellenloch, die auf Zapfen 8 aufgesteckt sind. Auf den Paletten 6 auf der oberen Rollbahn 3 befinden sich bearbeitete Werkstücke 9. Die Pfeile 10 und 11 kennzeichnen die Transportrichtungen der Paletten 5 bzw. 6. Die Rollbahnen können entweder derart schräg verlaufen, daß die Schwerkraft die für die Verschiebung erforderliche Kraft liefert, oder die Rollbahnen können mit Antriebvorrichtungen für die Verschiebung versehen sein. Die Rollbahnen 2 und 3 können an ihren äußeren Bereichen mit Spannvorrichtungen 12 versehen sein, welche die äußersten Paletten 5a und 6a in einer definierten Lage fixieren. Für diese Fixierung können die Paletten mit Aussparungen 16 für die Spannvorrichtung 12 versehen sein.

Die untere Rollbahn wird mit mehreren Paletten mit unbearbeiteten Werkstücken 7 beladen. Auf der oberen Rollbahn 3 wird ganz außen eine leere Palette 6a plaziert, auf welche bearbeitete Werkstücke 9 abgelegt werden sollen. Der Roboter greift ein unbearbeitetes Werkstück 7 von der Palette 5a, nimmt ein bearbeitetes Werkstück 9 aus der Bearbeitungsmaschine, setzt das unbearbeitete Werkstück ein, und plaziert anschließend das bearbeitete Werkstück 9 auf der Palette 6a. Wenn eine Palette 6a voll ist, wird die Spannvorrichtung 12 geöffnet, der Roboter greift

- 5 -

gleichzeitig die leere Palette 5a und plaziert diese ganz außen auf der Rollbahn 3, wo sie durch die Spannvorrichtung 12 fixiert wird. Dort befindliche Paletten können entweder durch die Schwerkraft, durch eine Antriebsvorrichtung oder vom Roboter in Richtung des Pfeils 11 verschoben werden. Die Paletten 5 auf der unteren Rollbahn werden einen Schritt in Richtung des Pfeils transportiert, worauf die äußerste Palette 5a von der Spannvorrichtung 12 in einer definierten Lage fixiert wird. Die Paletten können entweder mit einem Greifstück 13 zur Verbindung der Palette 5a mit einer Greifvorrichtung am Roboterarm versehen sein, oder es kann auf den Paletten eine feste Attrappe 14 vorhanden sein, welche dieselbe Form und Größe wie ein unbearbeitetes Werkstück hat, so daß die normale Greifvorrichtung des Roboters für die Werkstücke auch zum Heben und Transport von Paletten von der unteren Bahn 2 auf die obere Bahn 3 benutzt werden kann.

Patentanwalt und Rechtsanwalt
Dr.-Ing. Dipl.-Ing. Joachim B o e c k e r

6 Frankfurt/Main 1 , 15.4.1983
Rathenauplatz 2-8       21 284 PE
Telefon: (06 11) *28 23 55
Telex: 4 189 066 itax d

0094337

- 6 -

## Patentansprüche

1. Verfahren für die Zuführung und Wegführung von Arbeitsstücken zu und von einer von einem Roboter bedienten Bearbeitungsmaschine, dadurch gekennzeichnet, daß die zu bearbeitenden Werkstücke der Maschine auf Paletten (5) auf einer ersten Bahn (2) zugeführt werden, von einer Palette (5a) weggenommen und in die Bearbeitungsmaschine eingesetzt werden, nach der Bearbeitung aus der Bearbeitungsmaschine herausgenommen und auf einer Palette (6a) auf einer zweiten Bahn plaziert werden und daß eine von Werkstücken entleerte Palette (5a) von dem die Bearbeitungsmaschine bedienenden Roboter von der ersten Bahn (2) zu der zweiten Bahn (3) transportiert wird.

2. Magazin zur Durchführung des Verfahrens nach Anspruch 1, dadurch gekennzeichnet, daß es eine erste Bahn (2) für die Zuführung von zu bearbeitenden Werkstücken (7) enthält, daß es eine zweite Bahn (3) für die Wegführung von bearbeiteten Werkstücken (9) enthält, daß es Paletten (5, 6) als Unterlage für mehrere Werkstücke (7, 9) in bestimmten Positionen enthält und daß die Paletten (5, 6) mit Anordnungen versehen sind, mit welchen der Roboter eine auf der ersten Bahn (2) befindliche geleerte Palette (5a) greifen und zu der zweiten Bahn (3) transportieren kann.

3. Magazin nach Anspruch 2, dadurch gekennzeichnet, daß die Paletten (5, 6) mit einer festen Attrappe (14) versehen sind, die im wesentlichen dieselbe Form wie die Werkstücke (7, 9) hat, wobei eine für die Werkstücke (7, 9) bestimmte Greifvorrichtung beim Versetzen einer Palette (5a) von der ersten Bahn (2) auf die zweite Bahn (3) verwendet werden kann.

/7

15.4.1983
21 284 PE
0094337

- 7 -

4. Magazin nach Anspruch 2 oder 3, dadurch gekennzeichnet, daß die erste Bahn (2) unter der zweiten Bahn (3) oder umgekehrt angeordnet ist.

5. Magazin nach Anspruch 2 oder 3, dadurch gekennzeichnet, daß die Bahnen (2, 3) mit Spannvorrichtungen (12) zur Fixierung der Paletten (5, 6) in einer definierten Lage in den Entlade- und Beladestationen versehen sind.

/8

0094337